# EUROPÄISCHE PATENTANMELDUNG

(11) **EP 1 324 008 A1**
(43) Veröffentlichungstag der Anmeldung: **02.07.2003**
(21) Anmeldenummer: 01130150.4
(22) Anmeldetag: 19.12.2001
(51) Int. Cl.: G01D 5/20

(54) **Verfahren und Vorrichtung zur Demodulierung amplitudenmodulierter Signale, insbesondere von von einem Resolver gelieferten Ausgangssignalen**

(71) Anmelder: ZF Sachs AG, 97424 Schweinfurt (DE)
(72) Erfinder: Ebert, Detlef, Dipl.-Ing., 97488 Stadtlauringen (DE); Karg, Erich, Dipl.-Ing., 97799 Zeitlofs (DE)

(57) **Zusammenfassung**

Ein Verfahren zum Demodulieren amplitudenmodulierter Signale (S), insbesondere von von einem Resolver (12) gelieferten Ausgangssignalen (S₁, S₂), umfasst die Schritte:
a) Erzeugen eines Trägersignals (T) mit einer vorbestimmten Trägersignalfrequenz,
b) Amplitudenmodulieren des Trägersignals (T) zum Erhalt wenigstens eines amplitudenmodulierten Ausgangssignals (S, S₁, S₂),
c) Abtasten des wenigstens einen amplitudenmodulierten Ausgangssignals (S, S₁, S₂) zu Abtastzeiten (tᵢ), die in vorbestimmbarer Phasenbeziehung zu dem Trägersignal (T) oder/und dem wenigstens einen amplitudenmodulierten Ausgangssignal (S, S₁, S₂) stehen, zum Erhalt von den Abtastzeiten (tᵢ) jeweils zugeordneten Amplitudenwerten (Aᵢ, Aᵢⱼ).

## Beschreibung

Die vorliegende Erfindung betrifft ein Verfahren und eine Vorrichtung zur Demodulierung amplitudenmodulierter Signale, insbesondere zur Demodulierung von Signalen, welche als Ausgangssignale von einem Resolver geliefert werden.

Aus der EP 0 554 900 A1 ist ein allgemein auch als Resolver bezeichneter Stellungsdetektor bekannt, welcher beispielsweise dazu eingesetzt werden kann, die Drehlage des Rotors eines Elektromotors zu erfassen. Resolver sind derart aufgebaut, dass beispielsweise am Rotor eine Leiterbahn mit periodischer, also beispielsweise wicklungsartiger Formgebung vorgesehen ist, welche eine vorbestimmte Steigung bzw. Periode aufweist. Am Stator sind zwei derartige Leiterbahnen derart vorgesehen, dass sie zueinander eine Verschiebung von einem Viertel der Periode bzw. Steigung aufweisen. Die Rotorleiterbahn wird mit einem hochfrequenten Trägersignal vorbestimmter Frequenz beaufschlagt. Bei der Vorbeibewegung der Rotorleiterbahn an den Statorleiterbahnen werden in den Statorleiterbahnen von der Relativdrehlage abhängig modulierte Ausgangssignale erzeugt, welche als Grundfrequenz die Frequenz des Trägersignals aufweisen. Durch Ermittlung der Größenbeziehung der Modulationssignale der beiden sinus- bzw. kosinusartig modulierten Ausgangssignale kann auf die Drehlage geschlossen werden.

Die Auswertung der Ausgangssignale eines derartigen Resolvers findet im Allgemeinen derart statt, dass beispielsweise nach Verstärkung und Synchrongleichrichtung der beiden Signale diese durch jeweilige Tiefpassfilter geleitet werden, um die hochfrequente Grundfrequenz des Trägersignals herauszufiltern. Insbesondere beim Einsatz mit schnelldrehenden Systemen besteht das Problem, dass die Frequenz des Modulationssignals, also die Frequenz des eigentlich zu gewinnenden Sinus- bzw. Kosinussignals, sehr hoch wird und immer näher an den Frequenzbereich des Trägersignals heranreicht. Dabei entsteht in den Tiefpassfiltern, welche prinzipiell zum Herausfiltern der Grundfrequenz des Trägersignals erforderlich sind, eine Phasenverschiebung. Da diese Phasenverschiebung in beiden Signalen auftritt, werden tatsächlich zu einem vorbestimmten Zeitpunkt beide Ausgangssignale bzw. die Modulationssignale der Ausgangssignale in gleicher Weise zu den durch Phasenverschiebung auftretenden falschen Zeiten ausgewertet, mit der Folge, dass die vermittels der Größenbeziehung der beiden Modulationssignale erhaltbare Drehlage des Rotors ebenso verfälscht ist.

Es ist die Aufgabe der vorliegenden Erfindung, ein Verfahren bzw. eine Vorrichtung zur Demodulierung amplitudenmodulierter Signale vorzusehen, bei welchen der durch Demodulation gewonnene Informationsgehalt ohne Verfälschung zur nachfolgenden Auswertung bereitgestellt wird.

Gemäß einem ersten Aspekt der vorliegenden Erfindung wird diese Aufgabe gelöst durch ein Verfahren zum Demodulieren amplitudenmodulierter Signale, insbesondere von von einem Resolver gelieferten Ausgangssignalen, umfassend die Schritte:
a) Erzeugen eines Trägersignals mit einer vorbestimmten Trägersignalfrequenz,
b) Amplitudenmodulieren des Trägersignals zum Erhalt wenigstens eines amplitudenmodulierten Ausgangssignals,
c) Abtasten des wenigstens einen amplitudenmodulierten Ausgangssignals zu Abtastzeiten, die in vorbestimmbarer Phasenbeziehung zu dem Trägersignal oder/und dem wenigstens einen amplitudenmodulierten Ausgangssignal stehen, zum Erhalt von den Abtastzeiten jeweils zugeordneten Amplitudenwerten.

Die vorliegende Erfindung geht den Weg, den Verlauf eines Modulationssignals, also eines einem Trägersignal aufgeprägten Informationsgehaltes, durch periodische Abtastung eines Ausgangssignals zu erhalten. Dazu wird die Abtastung zu Zeiten vorgenommen, die in fester Beziehung zu dem zu modulierenden Trägersignal bzw. auch dem amplitudenmodulierten Ausgangssignal stehen. Es kann somit ein Verlauf diskreter Werte erlangt werden, der letztendlich den Modulationsinformationsgehalt wiedergibt.

Um die Signalauswertung mit größtmöglicher und durch kleine Signale möglichst wenig beeinträchtigter Art und Weise vornehmen zu können, wird vorgeschlagen, dass die Phasenlage der Abtastzeiten bezüglich des Trägersignals oder/und des wenigstens einen Ausgangssignals derart eingestellt wird, dass das amplitudenmodulierte Ausgangssignal im Bereich lokaler Extrema abgetastet wird.

Als Trägersignal kann beispielsweise ein Rechteckspannungssignal bereitgestellt werden.

Die vorliegende Erfindung kann, wie vorangehend angeführt, insbesondere bei sogenannten Resolvern Anwendung finden, bei welchen durch Vergleich zweier Modulationsinformationsgehalte auf die Drehlage bzw. auf die Verschiebelage eines bewegbaren Organs geschlossen werden kann. In diesem Falle kann gemäß der vorliegenden Erfindung weiter vorgesehen sein, dass wenigstens zwei Ausgangssignale erzeugt werden, und dass die wenigstens zwei Ausgangssignale zu gleichen Abtastzeiten abgetastet werden.

Die eingangs genannte Aufgabe wird gemäß einem weiteren Aspekt der vorliegenden Erfindung gelöst durch eine Vorrichtung zum Demodulieren amplitudenmodulierter Signale, insbesondere von von einem Resolver gelieferten Ausgangssignalen, umfassend eine Trägersignalerzeugungsanordnung zur Erzeugung eines Trägersignals mit vorbestimmter Trägersignalfrequenz, eine Ausgangssignalerzeugungsanordnung zur Amplitudenmodulation des Trägersignals zum Erhalt wenigstens eines amplitudenmodulierten Ausgangssignals sowie eine Abtast- und Halte-Anordnung zum Abtasten des wenigstens einen amplitudenmodulierten Ausgangssignals zu Abtastzeiten, die in vorbestimmbarer Phasenbeziehung zu dem Trägersignal oder/und dem wenigstens einen amplitudenmodulierten Ausgangssignal stehen.

Um bei einer derartigen Vorrichtung die feste Phasenbeziehung zwischen den Abtastzeiten einerseits und dem Trägersignal mit vorbestimmter, jedoch im Wesentlichen konstanter Frequenz andererseits erhalten zu können, wird vorgeschlagen, dass die Abtast- und Halte-Anordnung zum Vorgeben der Phasenlage der Abtastzeiten bezüglich des Trägersignals oder/und des wenigstens einen amplitudenmodulierten Ausgangssignals unter Sychronisier ansteuerung der Trägersignal erzeugungsanordnungsteht.

Weiter kann bei der erfindungsgemäßen Vorrichtung vorgesehen sein, dass die Ausgangssignalerzeugungsanordnung eine Resolveranordnung umfasst, welche wenigstens zwei Ausgangssignale mit zueinander phasenverschobenem Modulationssignal erzeugt.

Die vorliegende Erfindung wird nachfolgend mit Bezug auf die beiliegenden Zeichnungen detailliert beschrieben. Es zeigen:
- Fig. 1: eine Blockdarstellung des prinzipiellen Aufbaus einer erfindungsgemäßen Vorrichtung;
- Fig. 2: ein amplitudenmoduliertes Ausgangssignal.

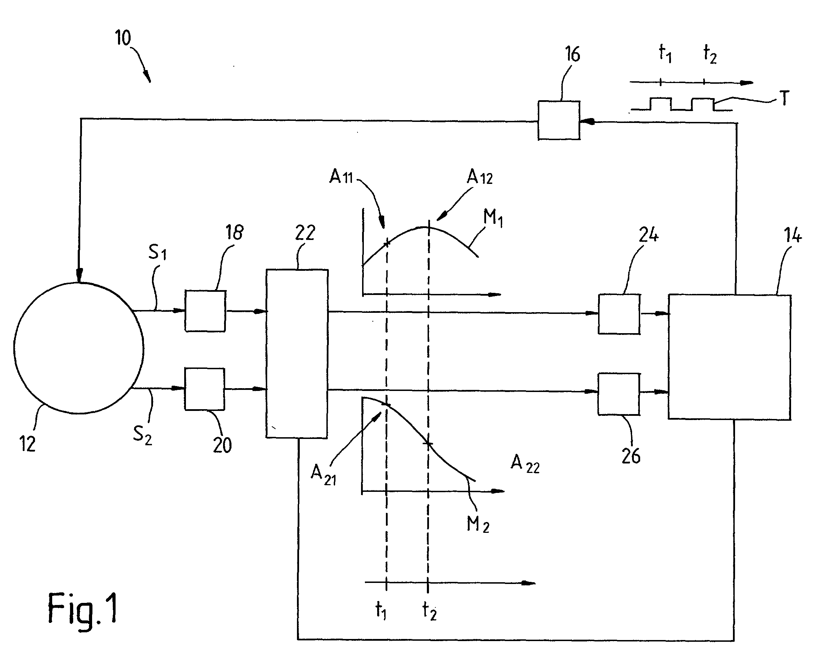

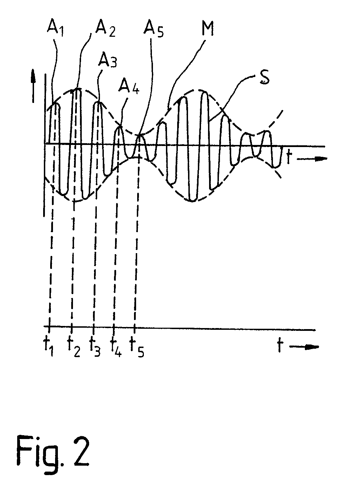

Die Fig. 1 zeigt in vereinfachter Art und Weise eine Vorrichtung 10, mit welcher amplitudenmodulierte Ausgangssignale S₁, S₂, wie sie beispielsweise von einem Resolver 12 geliefert werden, weiterverarbeitet werden können. Die erfindungsgemäße Vorrichtung 10 umfasst eine beispielsweise als Mikroprozessor aufgebaute bzw. einen Mikroprozessor umfassende Steuerschaltung 14, in welcher ein Trägersignal T mit einer vorbestimmten, konstanten Frequenz und Amplitude erzeugt wird. Das Trägersignal T kann beispielsweise aufgrund der leichten Erzeugbarkeit als Rechteckspannungssignal ausgebildet sein. Dieses Trägersignal T wird von der Steuerschaltung 14 über einen Verstärker 16 zu dem Resolver 12, beispielsweise der eingangs mit Bezug auf den Stand der Technik bereits beschriebenen Rotorleiterbahn bzw. Rotorwicklung, geleitet. Durch die elektromagnetische Wechselwirkung mit den beiden beispielsweise am Stator vorgesehenen Leiterbahnen werden die beiden Ausgangssignale S₁, S₂ erzeugt, die prinzipiell jeweils die Form des in Fig. 2 dargestellten amplitudenmodulierten Ausgangssignals S aufweisen. Das die Amplitudenmodulation vorgebende und im Wesentlichen auch den Modulationsinformationsgehalt repräsentierende Modulationssignal M weist bei beiden Ausgangssignalen S₁, S₂ einen sinusartigen Verlauf auf, wobei jedoch aufgrund der Positionierung der beiden Statorleiterbahnen bzw. -wicklungen die beiden Modulationssignale M₁, M₂ zueinander einen Phasenversatz von 90° bzw. einem Viertel der Periode der Modulationssignale M₁, M₂ aufweisen.

Die beiden Ausgangssignale S₁, S₂ werden über jeweilige Verstärker 18, 20 zu einer Abtast- und Halte-Schaltung 22 geleitet. In dieser Abtast- und Halte-Schaltung 22 werden die beiden Ausgangssignale S₁, S₂ jeweils zu gleichen Zeiten t₁, t₂, ... abgetastet, wie in den Fig. 1 und 2 erkennbar. Diese Abtastung liefert für jedes der Ausgangssignale S₁, S₂ bzw. der zugeordneten Modulationssignale M₁, M₂ einen der Amplitude des jeweiligen Ausgangssignals S₁, S₂ entsprechenden Abtastwert A₁₁, A₁₂, A₂₁, A₂₂ usw.

Die Abtastzeiten t₁, t₂ ... t₅ ... stehen aber in fester Phasenbeziehung zu dem Trägersignal T bzw. auch dem hochfrequenten Grundsignal der Ausgangssignale S₁, S₂. Dies kann beispielsweise dadurch erlangt werden, dass die Abtast- und Halte-Schaltung 22 unter Ansteuerung der Steuerschaltung 14 steht. Es kann auf diese Art und Weise erlangt werden, dass beispielsweise, wie in Fig. 2 erkennbar, die jeweiligen Abtastungen zu Abtastzeiten tᵢ vorgenommen werden, in welchen die Ausgangssignale S₁, S₂ jeweils einen maximalen Wert annehmen. Die sich dabei ergebenden Abtastwerte A entsprechen dann dem Amplituden- bzw. Spannungswert des jeweils abgetasteten Ausgangssignals S und geben, wie man insbesondere der Fig. 2 entnehmen kann, den Verlauf des dem Trägersignal T aufgeprägten Modulationssignals M wieder. Es kann auf diese Art und Weise ein bereits in diskrete Amplitudenwerte zerlegtes und somit zur Analog/Digital-Wandlung in jeweils zugeordneten Analog/Digital-Wandlern 24, 26 bereites Modulationssignal M₁, M₂ erhalten werden. Die von den Analog/Digital-Wandlern 24, 26 ausgegebenen Werte können dann in der Steuerschaltung 14 weiterverarbeitet werden, beispielsweise dadurch, dass den jeweiligen Abtastzeiten tᵢ ein durch die Abtastung erhaltbares Verhältnis der Amplituden- bzw. Spannungswerte zugeordnet wird und auf diese Art und Weise auch eine Zuordnung zu der zu diesem Zeitpunkt vorliegenden Relativdrehlage eines Rotors bezüglich eines Stators geschlossen wird.

Um bei der erfindungsgemäßen Vorgehensweise insbesondere in Verbindung mit einem sogenannten Resolver eine höhere zeitliche Auflösung zu erhalten, ist es selbstverständlich auch möglich, nicht nur im Bereich der Maxima des jeweiligen Ausgangssignals S dieses abzutasten, sondern beispielsweise bei jeder halben Periode eine Abtastung vorzunehmen, also beispielsweise auch die Minima abzutasten und den Betrag des Abtastsignals weiterzuverarbeiten. Auch dabei bleibt die einen wesentlichen Aspekt der vorliegenden Erfindung bildende definierte Phasenlage des Trägersignals bzw. auch der Ausgangssignale und der Zeitpunkte, zu welchen eine Abtastung der Ausgangssignale vorgenommen wird, erhalten.

Selbstverständlich können die Ausgangssignale auch zu anderen Zeitpunkten abgetastet werden. Von Bedeutung ist, dass zu jedem Zeitpunkt die beiden bei einem Resolver gelieferten Ausgangssignale ein definiertes Größenverhältnis aufweisen, das auf die zu diesem Zeitpunkt vorhandene Drehlage eines Rotors schließen lässt.

Es ist selbstverständlich, dass die erfindungsgemäße Vorgehensweise, bei welcher der durch Einsatz von Tiefpassfiltern insbesondere bei hochfrequenten Modulationssignalen auftretende Phasenfehler völlig ausgeschaltet werden kann, auch bei Einsatz eines linear arbeitenden Positionsgebers Anwendung finden kann. Grundsätzlich kann die vorliegende Erfindung auch dann verwendet werden, wenn lediglich ein einziges amplitudenmoduliertes Ausgangssignal vorhanden ist. Erforderlich ist gemäß dem wesentlichen Aspekt der vorliegenden Erfindung, dass das Trägersignal, welches zur Amplitudenmodulation herangezogen wird, bzw. die amplitudenmodulierten Ausgangssignale mit ihren hochfrequenten Grundsignalen in bekannter bzw. bestimmbarer Phasenlage zu den Zeiten stehen bzw. bringbar sind, zu welchen ein derartiges Ausgangssignal dann abgetastet wird.

## Patentansprüche

1. Verfahren zum Demodulieren amplitudenmodulierter Signale (S), insbesondere von von einem Resolver (12) gelieferten Ausgangssignalen (S₁, S₂), umfassend die Schritte:
a) Erzeugen eines Trägersignals (T) mit einer vorbestimmten Trägersignalfrequenz,
b) Amplitudenmodulieren des Trägersignals (T) zum Erhalt wenigstens eines amplitudenmodulierten Ausgangssignals (S, S₁, S₂),
c) Abtasten des wenigstens einen amplitudenmodulierten Ausgangssignals (S, S₁, S₂) zu Abtastzeiten (tᵢ), die in vorbestimmbarer Phasenbeziehung zu dem Trägersignal (T) oder/und dem wenigstens einen amplitudenmodulierten Ausgangssignal (S, S₁, S₂) stehen, zum Erhalt von den Abtastzeiten (tᵢ) jeweils zugeordneten Amplitudenwerten (Aᵢ, Aᵢⱼ).

2. Verfahren nach Anspruch 1,
**dadurch gekennzeichnet, dass** die Phasenlage der Abtastzeiten (tᵢ) bezüglich des Trägersignals (T) oder/und des wenigstens einen Ausgangssignals (S, S₁, S₂) derart eingestellt wird, dass das amplitudenmodulierte Ausgangssignal (S, S₁, S₂) im Bereich lokaler Extrema abgetastet wird.

3. Verfahren nach Anspruch 1 oder 2,
**dadurch gekennzeichnet, dass** als Trägersignal (T) ein Rechteckspannungssignal erzeugt wird.

4. Verfahren nach einem der Ansprüche 1 bis 3,
**dadurch gekennzeichnet, dass** wenigstens zwei Ausgangssignale (S₁, S₂) erzeugt werden, und dass die wenigstens zwei Ausgangssignale (S₁, S₂) zu gleichen Abtastzeiten (tᵢ) abgetastet werden.

5. Vorrichtung zum Demodulieren amplitudenmodulierter Signale (S), insbesondere von von einem Resolver (12) gelieferten Ausgangssignalen (S₁, S₂), insbesondere zur Durchführung des Verfahrens nach einem der vorangehenden Ansprüche, umfassend:
- eine Trägersignalerzeugungsanordnung (14) zur Erzeugung eines Trägersignals (T) mit vorbestimmter Trägersignalfrequenz,
- eine Ausgangssignalerzeugungsanordnung (12) zur Amplitudenmodulation des Trägersignals (T) zum Erhalt wenigstens eines amplitudenmodulierten Ausgangssignals (S, S₁, S₂),
- eine Abtast- und Halte-Anordnung (22) zum Abtasten des wenigstens einen amplitudenmodulierten Ausgangssignals (S, S₁, S₂) zu Abtastzeiten (t₁), die in vorbestimmbarer Phasenbeziehung zu dem Trägersignal (T) oder/und dem wenigstens einen amplitudenmodulierten Ausgangssignal (S, S₁, S₂) stehen.

6. Vorrichtung nach Anspruch 5,
**dadurch gekennzeichnet, dass** die Abtast- und Halte-Anordnung (22) zum Vorgeben der Phasenlage der Abtastzeiten (tᵢ) bezüglich des Trägersignals (T) oder/und des wenigstens einen amplitudenmodulierten Ausgangssignals (S, S₁, S₂) unter Sychronisieransteuerung der Trägersignalerzeugungsanordnung (14) steht.

7. Vorrichtung nach Anspruch 5 oder 6,
**dadurch gekennzeichnet, dass** die Ausgangssignalerzeugungsanordnung (12) eine Resolveranordnung (12) umfasst, welche wenigstens zwei Ausgangssignale (S₁, S₂) mit zueinander phasenverschobenem Modulationssignal (M₁, M₂) erzeugt.
